Europäisches Patentamt

European Patent Office

Office européen des brevets

(19)

(11) Publication number: **0 427 894 A1**

# EUROPEAN PATENT APPLICATION

(21) Application number: **89311717.6**

(22) Date of filing: **13.11.89**

(51) Int. Cl.5: **A01N 65/00, A01N 45/00,**
**A01N 43/16, A01N 37/40**

(43) Date of publication of application:
**22.05.91 Bulletin 91/21**

(84) Designated Contracting States:
**AT BE CH DE ES FR GB IT LI LU NL SE**

(71) Applicant: **MITSUI NORIN CO., LTD.**
**1-20, 3-chome, Nihonbashimuromachi**
**Chuo-ku**
**Tokyo(JP)**

(72) Inventor: **Hara, Yukihiko**
**2-2-7, Minamisurugadai**
**Fujieda-shi Shizuoka-ken(JP)**
Inventor: **Okada, Fumio**
**No. 3187, Kanya Kanaya-cho**
**Haibara-gun Shizuoka-ken(JP)**

(74) Representative: **SERJEANTS**
**25, The Crescent King Street**
**Leicester, LE1 6RX(GB)**

(54) Expellent for land and aquatic shells.

(57) A repellent for land and/or aquatic molluses comprises tannic acid, tea tannin, polyphenol hydrolysis products thereof or a mixture thereof. The repellent does not act as a lure or bait, attracting the molluses and killing only those which take it; but rather repels the molluses and kills those which linger in the vicinity of the repellent.

EP 0 427 894 A1

## EXPELLENT FOR LAND AND AQUATIC SHELLS

Background of the Invention

The invention relates to an expellent for land shells, such as slugs and snails, and aquatic shells.

Land molluscs, slugs and snails breed by eating crops. They are great vermin for green vegetables, fruit vegetables, edible roots, flowers, shiitake mushroom and the like. Accordingly, various methods for expelling slugs and snails have been devised in order to prevent crop damage by slugs and snails. Formerly, they were killed with poison by giving food coated with lead arsenate or yellow phosphor agent, or expelled by methods resorting to luring and killing. At present when the use of agricultural chemicals is limited, however, expellents for slugs and snails are few and hence, a luring and killing method resorting to the use of an expellent having meta-aldehyde for its main component is mainly employed.

Mud snails eat paddy field crops, and marine shells such as barnacles stick to the bottom of ships, fishing nets, etc. Repellents for them are required.

However, expellents such as meta-aldehyde suffer from the defect that their effects are lowered by rain or high humidity, and they do not produce desired effects unless slugs and snails take them. Further, there has been heretofore no effective expelling method with regard to eggs of slugs and snails. On the other hand, expellents which cause no environmental pollution are indispensable to aquatic shells; natural substances usable without anxiety have been sought for.

Summary of the Invention

The invention provides an expellent for land shells and/or aquatic shells, which expellent comprises tannic acid, tea tannin, polyphenol hydrolysis products thereof or a mixture thereof.

Detailed Description of the Invention

A study of the behaviour and habits of slugs and snails has been made. It has been observed that slugs and snails are not found to live in tea gardens, even through organic matter accumulates in tea gardens and the slugs and snails breed in the same season as tea plants sprout. It has also been observed that nocturnal slugs remain in garbage containing used tea leaves in daytime as if they were caught. Thus it has been found that slugs and snails are captured by tannin, a constituent of tea, and die in the end, and that they evade tea tannin. It has also been found that when a slight amount of tea tannin is dissolved in water where a great variety of aquatic shells live, the animals immediately emit sticky substances and die.

The inventors have determined that the active substances of tea tannin are catechins and theaflavins. Based on the findings, they have investigated tannic acid obtained from bark and its hydrolysis product, gallic acid. They have discovered that the polyphenols have the same effect as the tannic acid, and thus developed the expellent for land and marine shells according to the invention.

An expellent for land and aquatic shells thus consists of tannic acid, which may be obtained from trees or fruits, tea tannin, which may be obtained from tea leaves, polyphenols obtained by hydrolysis of them, or a mixture thereof. Manufacturing methods of tea tannin is not limitative, for example said methods are described in Japanese Patent Kokai Koho 59-219384, Japanese Patent Kokai Koho 60-13780, Japanese Patent Kokai Koho 61-130285, etc. Tannic acid is commercially available, and is described in MERCK INDEX, (published by MERCK & Co., Inc., U. S. A.). Gallic acid is one of the polyphenols and is also commercially available. It too is described in MERCK INDEX. The component polyphenols contained in tannin and the related substances described above combine with gelatin, and are not thereafter easily dissociated from the gelatin. The sticky substances emitted by shells such as slugs and snails are found to be gelatin. Accordingly, the behaviour of the shells is hindered by the combination of tannin with gelatin. The slugs and snails evade, escape or die when allowed to contact with a tannin solution, and eggs deposited are condensed and hardened. The operation is exerted whether the slugs and snails feed or not as against the case of the conventional luring and killing agents. The same effect as described above is exerted on aquatic shells such as barnacles, flat barnacles, clams, mud snails and sea snails.

The effective components of the invention do not lure slugs and snails as conventional treatments. Rather they repel slugs and snails. Those that are not repelled are inactivated by the coagulation of the tannins with the gelatin which they emit, and eventually die. Furthermore, their eggs are inactivated by the

EP 0 427 894 A1

condensation of gelatinous pouches with tannin.

Further, liquid or solid substances utilizing components of tea generally taken, tannin or related substances, are used directly or in admixture in raising seedling beds, etc., thereby eluting tannin little by little with sprinkled water or rainwater applied. Slugs, snails or eggs thereof are expelled by allowing them to contact with tannin. Thus, the expellent of the invention has a useful expelling effect on slugs and snails, avoiding harm to men and beasts, inconvenience in handling, etc. Further, the expelling effect on aquatic shells can be achieved by spraying the expellent of the invention directly on paddy fields or mixing it in paint used for fishing nets or the bottom of ships.

The following Examples illustrate the invention.

Example 1

A composition comprising 4% polyphenon-G ( a tea extract powder having green tea polyphenol components (catechins) as its main components, produced by Mitsui Norin Co., Ltd.), 1% citric acid, 8% ethanol and 87% water was prepared. The composition was sprayed on to five field slugs on a Petri dish. Within 30 minutes after spraying, all the field slugs emitted sticky substances and died.

Further, a 3% aqueous instant tea (black tea) solution was prepared, and the same experiment was carried out on two field slugs. Similar results were obtained.

Example 2

Ten field slugs were placed in a Petri dish whose bottom was covered with sun-warmed mould which had been saturated with a 4% aqueous polyphenon-G solution (treated group). A further ten field slugs were placed in a Petri dish whose bottom was covered with sun-warmed mould which had been saturated with water (untreated group). The movements of the field slugs were observed. This experiment was carried out twice. The results are shown in Table 1.

In the untreated groups, the survival rate was 100% (escape rate: 30%). In the treated groups, mortality exceeded 80% even discounting escapees whose death could not be confirmed.

Table 1

| | Number of Slugs | Death in Petri Dish | Escape out of Petri Dish | Missing | Survival in Petri Dish | Mortality of Slugs |
|---|---|---|---|---|---|---|
| Treated Group (1) | 10 | 8 | 1 | 1 | 0 | 80% |
| Treated Group (2) | 10 | 9 | 1 | 0 | 0 | 90% |
| Untreated Group (1) | 10 | 0 | 3 | 0 | 7 | 0% |
| Untreated Group (2) | 10 | 0 | 3 | 0 | 7 | 0% |

Example 3

4% aqueous polyphenon-G solutions were stood for 50 days in shaded and unshaded states. The solutions were then diluted to 0.8% and their effect on field slugs was investigated. Three field slugs were treated with each solution and the movements of the field slugs were observed. All the field slugs in both groups died within 3 to 5 minutes.

Example 4

An artificial fibre mat (10 cm x 10 cm) was saturated with an aqueous polyphenon-G solution, and three slugs were placed in the central part of the mat. The slugs moved for about 10 minutes, but then their mucus combined with catechins in the mat, whereby the slugs could not move and died. Accordingly, the effect is maintained if tea polyphenol is present in the mat. However, water containing iron ions is better

3

avoided in dilution.


Example 5

0.8% and 3% aqueous polypenon-G solutions were each sprayed on five thin-shelled snails to investigate the effects. When the solutions were sprayed, the snails foamed and entered their shells with parts of flesh left outside the shells, but died as such and rotted.

Further, when a 1.5% aqueous tannic acid solution was sprayed on five such snails, their bodies darkened and all died.


Example 6

The effect of tannin on aquatic shells was investigated. Two kinds of barnacles, a clam and four kinds of aquatic snails were used. Their movements were observed on placing them for two hours in a 3% saline solution containing 1.5% tannic acid or 0.8% polyphenon-G. Mud snails were treated for 4 hours in tannic acid or polyphenon-G solutions of twice the aforesaid concentration in pure water. The results are shown in Table 2.

Mud snails emitted purple coloured liquid a short time after immersion and died within four hours. Aquatic shells in saline solution formed filmy turbidities a short time after immersion. The clam and snails that could firmly close their lids seemed to survive better, but barnacles which have only one shell are susceptible to tannins and they died in position or were easily parted from the rock.

Table 2

| Treatment Solution | Concentration | Shells Experimented | Number of Shells | Number of Survivors | Number of Deaths |
|---|---|---|---|---|---|
| Tannic Acid | 1.5% | Barnacle | 5 | 4 | 1 |
| | | Flat barnacle | 3 | 0 | 3 |
| | | Clam | 5 | 4 | 1 |
| | | Mud snail | 5 | 0 | 5 |
| | | Sea snail[1] | 5 | 1 | 4 |
| | | Sea snail[2] | 1 | 1 | 0 |
| | | Sea snail[3] | 1 | 1 | 0 |
| Polyphenon-G | 0.8% | Barnacle | 5 | 0 | 5 |
| | | Flat barnacle | 3 | 0 | 3 |
| | | Clam | 5 | 3 | 2 |
| | | Mud snail | 5 | 0 | 5 |
| | | Sea snail[1] | 5 | 0 | 5 |
| | | Sea snail[2] | 1 | 1 | 0 |
| | | Sea snail[3] | 1 | 1 | 0 |
| Barnacle: Balanus sp., Flat barnacle: Lilophura japonica, Clam: Tapes japonica, Mud snail: Cipagopaludina chinensis japonica, Sea snail[1]: Umboniumgiganeum, Sea snail[2]: Epitonium sp., Sea snail[3]: Charonia tritonis | | | | | |


**Claims**

1. An expellent for land and/or aquatic shells, which expellent comprises tannic acid, tea tannin, polyphenol hydrolysis products thereof or a mixture thereof.

2. An expellent according to claim 1 comprising tannic acid obtained from trees or fruits.

3. An expellent according to claim 1 or claim 2 comprising tea tannin containing catechins or theaflavins.

4. An expellent according to any preceding claim comprising gallic acid as the polyphenol.

5. A method of expelling land and/or aquatic shells from a site infested thereby, the method comprising applying an expellent according to any preceding claim to the site.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | US-A-2 159 550  (J.R. CROSS) <br> * Whole document * <br> --- | 1-5 | A 01 N  65/00 <br> A 01 N  45/00 <br> A 01 N  43/16 <br> A 01 N  37/40 |
| X | FR-A-  888 913  (P.R.E. DORR) <br> * Whole document * <br> --- | 1-5 | |
| X | CHEMICAL ABSTRACTS, vol. 104, no. 11, 17th March 1986, page 239, abstract no. 83773u, Columbus, Ohio, US; S.M.H. AYOUB et al.: "On the molluscicidal activity of the plant phenolics", & FITOTERAPIA 1985, 56(4), 225-6 <br> --- | 1,2,4,5 | |
| X | CHEMICAL ABSTRACTS, vol. 103, no. 23, 9th December 1985, page 406, abstract no. 193144b, Columbus, Ohio, US; S.M.H. AYOUB: "Flavenol molluscicides from the Sudan acacias", & INT. J. CRUDE DRUG RES. 1985, 23(2), 87-90 <br> --- | 1,2,4,5 | |
| X | GB-A-2 112 286  (CIBA-GEIGY AG) <br> * Page 1, lines 42-59; page 3, lines 17-24 * | 1,2,5 | TECHNICAL FIELDS SEARCHED (Int. Cl.5) |
| Y | --- | 3,4 | A 01 N |
| Y | PHARMAZIE, vol. 30, no. 11, November 1975, pages 736-743, VEB Verlag Volk und Gesundheit, Berlin, DD; H. THIEME et al.: "Über das Vorkommen von Flavonoiden und Gerbstoffen in den Blättern einiger afrikanischer Acacia-Arten" <br> * Page 739, left-hand column, chapter 3.3.8: "Catechinderivate" * <br> ---                    -/- | 3,4 | |

The present search report has been drawn up for all claims

| Place of search | Date of completion of the search | Examiner |
|---|---|---|
| THE HAGUE | 06-07-1990 | MUELLNERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A- 393 375  (COOPER McDOUGALL & ROBERTSON LTD) * Whole document * | 1,2,45 | |
| Y | CHEMICAL ABSTRACTS, vol. 37, no. 8, 20th April 1943, column 2127, abstract no. 6, Columbus, Ohio, US; F.A. GUNTHER et al.: "Critical examination of the roots of Derris ellptica", & J. ECON. ENTOMOL. 35, 941(1942) | 1,2,45 | |
| Y | GB-A- 156 827  (J.A. LILLIE) * Whole document * | 1,2,5 | |
| Y | CHEMICAL ABSTRACTS, vol. 46, no. 13, 10th July 1952, column 6201, abstract no. e, Columbus, Ohio, US; H. BENNETT: "Alchornea cordifolia leaves and bark from Nigeria", & COLONIAL PLANT AND ANIMAL PRODUCTS (BRIT.) 1, 132-4(1950) | 1,2,5 | |
| A | DE-C-   41 113  (H. FUCHS) * Page 1, left-hand column, paragraphs 1,2 * | 1-5 | TECHNICAL FIELDS SEARCHED (Int. Cl.5) |
| A | TETRAHEDRON, vol. 29, no. 1, 1973, pages 125-142, Pergamon Press, Oxford, GB; P.D. COLLIER et al.: "The theaflavins of black tea" * Page 125, left-hand column, chapter: "Introduction"; page 126, figures 1,2 * | 3 | |

The present search report has been drawn up for all claims

| Place of search | Date of completion of the search | Examiner |
|---|---|---|
| THE HAGUE | 06-07-1990 | MUELLNERS W. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)